## Europäisches Patentamt
## European Patent Office
## Office européen des brevets

(11) Numéro de publication: **0 078 210**
**B1**

(12) **FASCICULE DE BREVET EUROPEEN**

(45) Date de publication du fascicule du brevet:
11.09.85

(21) Numéro de dépôt: **82401943.4**

(22) Date de dépôt: **22.10.82**

(51) Int. Cl.⁴: **G 01 F 1/12, F 01 D 17/16**

(54) **Perfectionnement aux compteurs Woltmann.**

(30) Priorité: 23.10.81 FR 8119892

(43) Date de publication de la demande:
04.05.83 Bulletin 83/18

(45) Mention de la délivrance du brevet:
11.09.85 Bulletin 85/37

(84) Etats contractants désignés:
**BE CH DE GB IT LI NL SE**

(56) Documents cités:
**DE - A - 1 948 622**
**DE - C - 960 862**

(73) Titulaire: **FLONIC S.A., 12, Place des Etats-Unis B.P. 422, F-92541 MontrougeCedex (FR)**

(72) Inventeur: **Lett, Roland, 2 Rue Léonard de Vinci, F-91330 Yerres (FR)**

(74) Mandataire: **Dronne, Guy, Giers Schlumberger 12 Place des Etats-Unis B.P. 121, F-92124 Montrouge (FR)**

## Description

La présente invention est relative aux appareils de mesure de débit de fluides à turbine axiale, du genre compteurs de Woltmann, dans lesquels la quantité de fluide s'écoulant dans une conduite est mesurée au moyen d'une turbine montée axialement dans cette conduite et fournissant un nombre de tours représentatif du débit à mesurer.

Dans les appareils de ce genre à sortie mécanique, on prévoit généralement pour détecter le nombre de tours de la turbine, une vis sans fin montée en aval sur l'arbre de la turbine qui engrène avec un pignon monté sur un autre arbre perpendiculaire à l'axe de la conduite et qui transmet à l'extérieur de la conduite l'information cherchée à un mécanisme de comptage.

De plus, ces appareils comportent aussi un volet de réglage qui est disposé en amont de la turbine pivotant sur un axe perpendiculaire à celui de la conduite et dont l'orientation angulaire est réglée en usine une fois pour toutes au cours de l'opération d'étalonnage de l'appareil. De tels appareils sont décrits, par exemple, dans les documents DE-C-960 862 et DE-A-1 948 622.

Les deux éléments précités, l'arbre de sortie de mouvement d'une part, l'axe du volet de réglage d'autre part, constituent des obstacles à l'écoulement du fluide et ont par suite l'inconvénient de créer respectivement une perte de charge dans l'appareil de mesure.

L'invention a pour objet un appareil de mesure de débit du type indiqué dans lequel la perte de charge due aux éléments ci-dessus est en grande partie diminuée grâce à une modification de structure de l'appareil.

L'appareil de mesure de débit de fluide, du type Woltmann ou à turbine axiale, suivant l'invention, comporte dans un élément de conduite tubulaire:

— une turbine montée à rotation sur un arbre coaxial audit élément,
— un arbre de sortie de mouvement couplé audit arbre de la turbine pour détecter le nombre de tours effectués par la turbine,
— et un volet de réglage orientable autour d'un axe en amont de la turbine pour l'étalonnage de l'appareil,

et il est caractérisé en ce que ledit arbre de sortie de mouvement et ledit axe du volet de réglage sont coaxiaux.

De préférence, l'arbre de sortie de mouvement passe à l'intérieur de l'axe du volet de réglage.

Cette structure a l'avantage de ne plus nécessiter sur le trajet du fluide qu'un obstacle unique, de sorte que la perte de charge se trouve diminuée vis-à-vis de celle existant dans les appareils de la technique antérieure. Un autre avantage consiste en une réduction du nombre de pièces du compteur.

L'invention est applicable aux appareils de mesure de débits de fluides en général, et notamment aux compteurs d'eau de gros calibres.

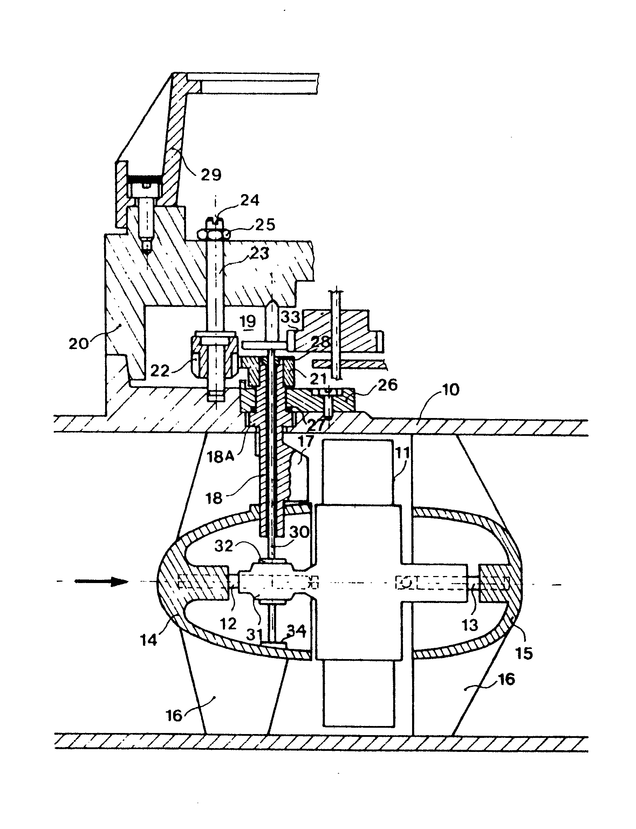

L'invention sera mieux comprise en se référant à la description suivante et au dessin annexé donné à titre d'exemple non limitatif d'un mode de réalisation d'un appareil conforme à l'invention.

Sur ce dessin, la figure représente schématiquement une vue en coupe partielle, de l'appareil par un plan parallèle à l'axe et passant par l'axe commun du volet de réglage et de l'arbre de sortie de mouvement de la turbine.

Dans un élément de conduite tubulaire 10, on voit une turbine 11 montée coaxialement à rotation sur deux demi-arbres 12, 13 entre deux carénages creux 14, 15 reliés à l'élément 10 par des nervures 16 d'orientation sensiblement radiale. Le fluide s'écoule dans l'élément 10 suivant le sens de la flèche.

En amont de la turbine 11, un volet 17 d'orientation angulaire réglable autour d'un axe approximativement perpendiculaire à l'axe de la conduite, est prévu pour l'étalonnage de l'appareil. Le volet 17 est solidaire d'un axe tubulaire 18 qui pivote à son extrémité inférieure dans une ouverture du carénage amont 14 et qui présente un épaulement 18A reposant sur un évidement correspondant de l'élément de conduite 10. L'extrémité supérieure de l'axe 18 située dans une chambre 19, formée entre l'élément de conduite 10 et une pièce de fermeture 20, porte un secteur denté 21 qui engrène avec un pignon 22. Le pignon 22 est monté sur un arbre 23 parallèle à l'axe 18 qui présente à son extrémité supérieure une fente 24 permettant à l'aide d'un tournevis d'orienter le volet 17. Un écrou 25 assure le blocage de l'arbre 23 dans une position fixe et maintient ainsi le volet 17 suivant l'orientation angulaire déterminée au cours de l'opération d'étalonnage de l'appareil. Une pièce auxiliaire 26 fixée sur l'élément de conduite 10 maintient l'axe 18 dans son logement contre la pression du fluide et serre aussi un joint annulaire 27 faisant office d'amortisseur de vibrations. L'appareil est fermé à sa partie supérieure par un couvercle 29 (partiellement représenté) plombé après étalonnage de l'appareil et interdisant tout accès à l'arbre 23.

Le mouvement de rotation de la turbine 11 est transmis à un arbre de sortie 30 au moyen d'un couple vis tangente 31-pignon 32 disposé à l'intérieur du carénage amont 14. L'arbre de sortie 30 passe, suivant l'invention, à travers l'axe tubulaire 18 du volet 17 et transmet son mouvement à un ensemble d'engrenages réducteurs dont une partie est identifiée sous le signe de référence 33 et monté dans la chambre 19 et relié au totalisateur de l'appareil éventuellement par l'intermédiaire d'une transmission magnétique à travers une paroi étanche. L'arbre 30 pivote à sa base dans une crapaudine 34 montée à l'intérieur du carénage 14 et à sa partie supérieure dans un palier 28 prévu dans l'axe tubulaire 18.

## Revendications

1. Appareil de mesure de débit de fluide du type Woltmann ou à turbine axiale, comportant, dans un élément de conduite tubulaire (10):

— une turbine (11) montée à rotation sur un arbre (12, 13) coaxial audit élément (10),
— un arbre (30) de sortie de mouvement couplé audit arbre (12, 13) de la turbine (11) pour détecter le nombre de tours effectués par la turbine (11),
— et un volet de réglage (17) orientable autour d'un axe (18) en amont de la turbine (11) pour l'étalonnage dudit l'appareil,

caractérisé en ce que ledit arbre (30) de sortie de mouvement et ledit axe (18) du volet de réglage (17) sont coaxiaux.

2. Appareil de mesure de débit suivant la revendication 1, caractérisé en ce que ledit arbre (30) de sortie de mouvement passe à l'intérieur de l'axe (18) du volet de réglage (17).

3. Appareil de mesure de débit suivant la revendication 2, caractérisé en ce que ledit arbre (30) de sortie de mouvement pivoté sur sa base dans une crapaudine (34) montée dans un carénage (14) en amont de la turbine (11) et à sa partie supérieure dans un palier (28) monté dans l'axe du volet de réglage (17).

## Patentansprüche

1. Gerät zur Messung des Durchsatzes eines fluiden Mediums, vom Typ Woltmann oder mit Axialturbine, wobei das Gerät in einem rohrförmigen Leitungselement (10) enthält:

— eine drehbar auf einer mit dem genannten Element (10) koaxialen Welle (12, 13) gelagerte Turbine (11),
— eine Bewegungsausgangswelle (30), die an die Welle (12, 13) der Turbine (11) angekoppelt ist, um die Anzahl von Umdrehungen zu erfassen, welche die Turbine (11) ausführt,
— und einen Einstellschieber (17), der um eine Achse (18) strömungsaufwärts von der Turbine (11) zur Eichung des genannten Gerätes orientierbar ist,

dadurch gekennzeichnet, daß die genannte Bewegungsausgangswelle (30) und die genannte Achse (18) des Einstellschiebers (17) koaxial sind.

2. Durchsatz-Meßgerät nach Anspruch 1, dadurch gekennzeichnet, daß die genannte Bewegungsausgangswelle (30) im Inneren der Achse (18) des Einstellschiebers (17) verläuft.

3. Durchsatz-Meßgerät nach Anspruch 2, dadurch gekennzeichnet, daß die genannte Bewegungsausgangswelle (30) an ihrem unteren Ende in einem Zapfenlager (34) gelagert ist, das in einem Verkleidungsteil (14) strömungsaufwärts von der Turbine (11) angebracht ist, und ihr oberes Teil in einem Lager (28) gelagert ist, welches in der Achse (18) des Einstellschiebers (17) montiert ist.

## Claims

1. A fluid flow rate measurement apparatus of the Woltmann or axial turbine type, which comprises, within a tubular conduit member (10):

— a turbine (11) rotatively mounted on a shaft (12, 13) coaxial with said member (10),
— a motion output shaft (30) coupled with said shaft (12, 13) of the turbine (11) for detecting the number of revolutions undergone by the turbine (11),
— a control shutter (17) rotatable about an axis (16) upstream of the turbine (11) for calibrating said apparatus,

characterized in that said motion output shaft (30) and said axis (18) of the control shutter (17) are coaxial.

2. A flow rate measurement apparatus according to claim 1 characterized in that said motion output shaft (30) extends inside the axis (18) of the control shutter (17).

3. A flow rate measurement apparatus according to claim 2, characterized in that said motion output shaft (30) is pivoted at the bottom thereof in a pivot bearing (34) mounted in a streamlining (14) upstream of the turbine (11), and at the upper end thereof, in a bearing (28) mounted within the axis (28) of the control shutter (17).